Europäisches Patentamt

(19) European Patent Office

Office européen des brevets

(11) Publication number: **0 448 407 A2**

# (12) EUROPEAN PATENT APPLICATION

(21) Application number: **91302519.3**

(22) Date of filing: **22.03.91**

(51) Int. Cl.⁵: **B29D 30/00**

(30) Priority: **22.03.90 JP 69691/90**

(43) Date of publication of application:
**25.09.91 Bulletin 91/39**

(84) Designated Contracting States:
**DE FR IT**

(71) Applicant: **Bridgestone Corporation
10-1, Kyobashi 1-Chome Chuo-Ku
Tokyo 104 (JP)**

(72) Inventor: **Yamakawa, Yasuhiro, c/o Technical
Center
Bridgestone Corporation, 1-1
Ogawahigashi-Cho
3-Chome, Kodaira City, Tokyo (JP)**
Inventor: **Shindo, Makito c/o Technical Center
Bridgestone Corporation 1-1
Ogawahigashi-Cho
3-Chome Kodaira City Tokyo (JP)**

(74) Representative: **Whalley, Kevin et al
MARKS & CLERK 57/60 Lincoln's Inn Fields
London WC2A 3LS (GB)**

(54) **Method of manufacturing tires with different sizes in hybrid manner.**

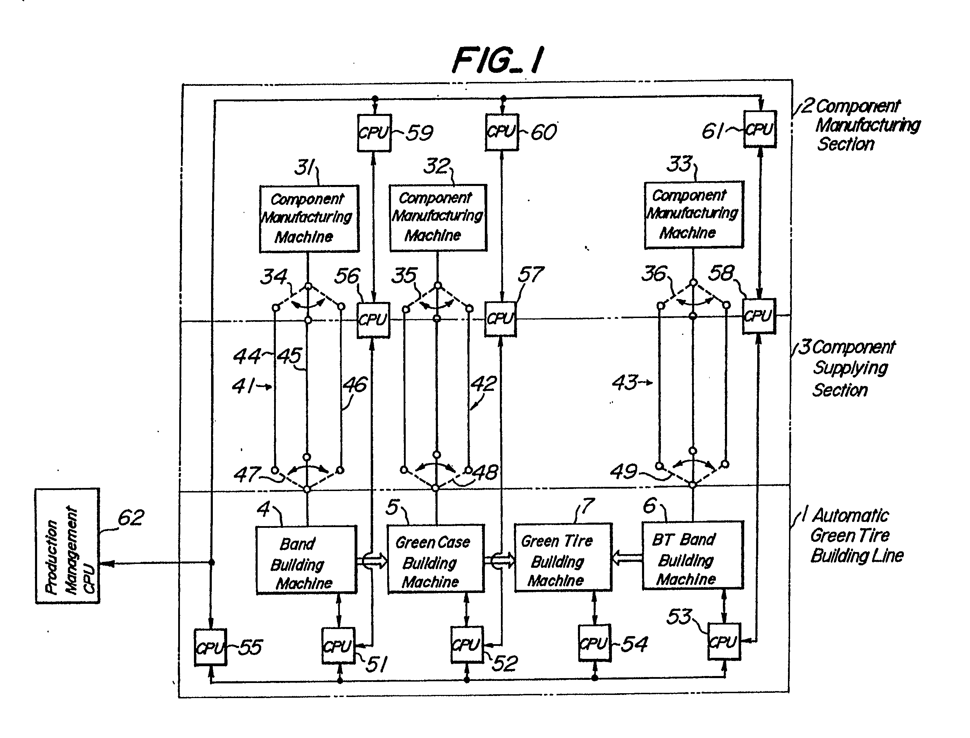

㉗ In a method of manufacturing green tires having different sizes in a hybrid manner, components having different sizes for producing bands (11), green cases (12) and belt tread bands (13) of the green tires (14) having different sizes are manufactured by respective component manufacturing machines under the control of a production process, and the thus manufactured components are stocked on selected component feeding paths having substantially flat surfaces in respective component stocking and supply machines. While the components in the component stocking and supplying machines are selectively supplied to a band building machine (4), green case building machine (5) and belt tread band building machine (6) in accordance with the production process, bands, green cases and belt tread bands having different sizes are produced. Then, a green case and a belt tread band having corresponding sizes are transported into a green tire building machine (7) to produce a green tire having a desired size. In each of the band building machine (4), green cases building machine (5), belt tread band building machine (6) and green tire building machine (7), drums having desired sizes are selectively introduced into a drum feeding path in accordance with the production process and the thus introduced drums are indexed at successive processing stations arranged along the drum feeding path. (Figure 1).

EP 0 448 407 A2

# FIG_1

2 Component Manufacturing Section

CPU ~59    CPU ~60    61 ~ CPU

31 Component Manufacturing Machine    32 Component Manufacturing Machine    33 Component Manufacturing Machine

34    56    35    57    36    58

CPU    CPU    CPU

44 ~ 45    3 Component Supplying Section

41 →    46    42    43 →

47    48    49

62 Production Management CPU

4 Band Building Machine    5 Green Case Building Machine    7 Green Tire Building Machine    6 BT Band Building Machine    1 Automatic Green Tire Building Line

CPU ~55    CPU ~51    CPU ~52    CPU ~54    53 ~ CPU

# METHOD OF MANUFACTURING TIRES WITH DIFFERENT SIZES IN HYBRID MANNER

The present invention relates to a method of manufacturing tires, and more particularly to a method of manufacturing green tires having different sizes in a hybrid manner.

In Japanese Patent Application Laid-open Publication Kokai Sho 58-217,239, there is described a known method of manufacturing pneumatic tires, in which a plurality of building drums are fed along a feeding path along which various processing stations are arranged and are successively indexed at these processing stations to form green tires. This known method is generally called the drum flow system.

In the known green tire manufacturing method of the drum flow system disclosed in said Japanese Patent Application Publication Kokai sho 58-217,239, a green tire is manufactured by supplying previously manufactured tire components such as inner and top tread onto a tire building drum with the aid of applicators arranged at respective processing stations, while the tire building drum is transported through successive processing stations. This known method is effectively applied to the manufacture of tires having the same size, but could not be advantageously applied to the manufacture of green tires having different sizes. That is to say, when tires having a size which is different from that of tires which have been manufactured are to be manufactured next, all or at least a part of the tire components which have been set in respective applicators are removed from the applicators and tire components to be used for manufacturing the next series of tires have to be set on the applicators. This requires very cumbersome and time consuming labor work.

Moreover, in the known tire manufacturing method, a spool is provided as a bypath of the feeding path of the drums and the drums are selectively transported into the spool in accordance with sizes of tires to be built. In the spool, the drum is adjusted and then is fed into the main feeding path of drums. The adjustment of a drum in accordance with a size of a tire to be formed by the relevant drum is cumbersome and requires a relatively long time. In this manner, the known green tire building method could not be effectively applied to the manufacture of the green tires having different sizes in a hybrid manner.

In the known tire manufacturing method, each of the tire components such as inner and top tread is separately manufactured as a roll, and the rolls thus manufactured are set at respective building lines. In respective building lines, the tire components are rewound from the rolls and cut into respective tire components having desired lengths.

When the above mentioned rolls of the tire components are used, outer dimensions of some components might be changed due to the winding pressures and curvature, the stress is stored within the tire components, and the surface tack is changed. Further, the degree of these variations is liable to be changed in accordance with a position in the roll, because the curvature and stress at an inner position of the roll are usually different from those at an outer position of the roll. Therefore, it is difficult to manufacture the green tires having a high quality in an efficient and stable manner.

The present invention has for its object to provide a novel and useful method of manufacturing green tires having different sizes efficiently and stably in a hybrid manner without causing undesired variation in properties of the components.

It is another object of the invention to provide a method of manufacturing green tires having different sizes, in which very cumbersome and time consuming work for adjusting the sizes of drums in accordance with the sizes of tires to be manufactured.

According to the invention, a method of manufacturing tires with different sizes in a hybrid manner comprises the steps of:

controlling, in accordance with a production process, an automatic tire building line for building green tires, component manufacturing section for producing various components for building green tires of different sizes, and a component supplying section for supplying components produced by the component manufacturing section into said automatic tire building line such that components corresponding to desired sizes of drums which correspond to sizes of tires to be manufactured in succession are selectively supplied to the automatic tire building line to produce green tires having desired sizes; and

feeding the thus manufactured green tires to a succeeding process.

According to further aspect of the present invention, a method of manufacturing green tires having different sizes in a hybrid manner comprises the steps of:

producing components which are used for building green tires having different sizes in a components manufacturing section;

supplying the components thus produced in the component manufacturing section to a plurality of substantially flat component feeding paths in a component supplying section;

storing the components thus supplied to the component feeding paths therein;

selectively supplying components stored in the components feeding paths to band building machine, green case building machine and belt tread band building machine;

producing bands on drums having desired sizes in the band building machine;

producing green cases on drums having desired sizes in the green case building machine;

producing belt tread band on drums having desired sizes in the belt tread building machine;

transferring the green cases produced in the green case building machine and the belt tread band produced by the belt tread band building machine to a green tire building machine;

producing green tires in the green tire building machine by combining said green cases supplied from the green case building machine and the belt tread band supplied from said belt tread band building machine on drums having desired sizes; and

controlling said component manufacturing section, component supplying section, band building machine, green case building machine, belt tread band building machine and green tire building machine in accordance with a production process such that green tires having different sizes are manufactured in a hybrid mode.

In the method according to the invention, the automatic green tire building line, component manufacturing section and component supplying section are controlled in accordance with the production process in a unified manner, so that the components for building the green tires can be prepared in an efficient manner and thus the green tires having different sizes can be manufactured also efficiently. Moreover, the green tire building line is divided into the band building machine, green case building machine, belt tread band building machine and green tire building machine and in each of these building machines drums having different sizes are selectively used in accordance with sizes of tires to be manufactured successively. Therefore, the drums can be used for manufacturing green tires having predetermined sizes, so that the drums can be made simple in construction and cheap in cost. This results in that the whole factory of manufacturing the tires can be constructed economically. Further, the change in the size of tires to be manufactured can be performed in a easy and prompt manner, so that the tires having different sizes can be manufactured efficiently in a hybrid manner.

For a better understanding of the invention, reference is taken to the accompanying drawings, in which:

Fig. 1 is a block diagram showing a whole construction of a factory for manufacturing green tires by the method according to the invention;

Figs. 2A to 2E are perspective views illustrating band, green case, BT band, assembly of green case and BT band, and green tire, respectively;

Fig. 3 is a schematic plan view depicting the green case building machine; and

Fig. 4 is a side view representing a modified embodiment of the component supplying machine.

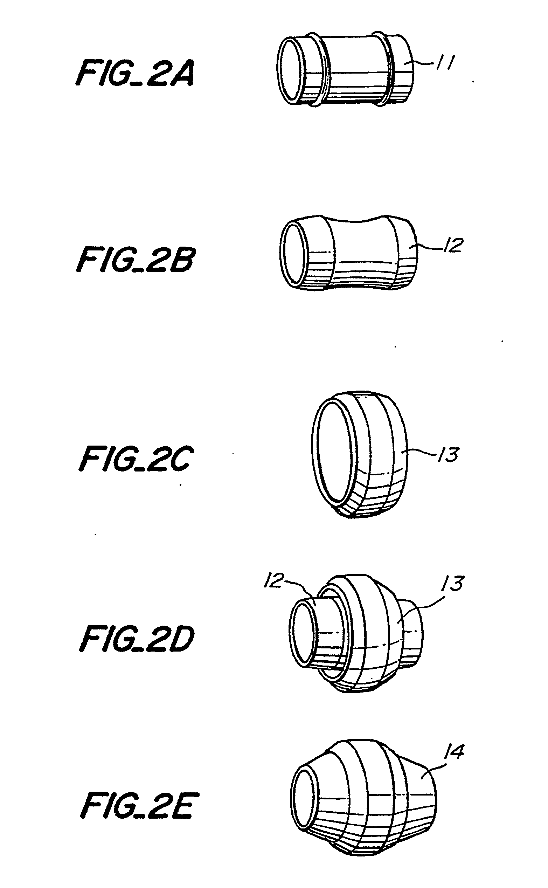

Fig. 1 is a block diagram showing a whole construction of a factory for manufacturing green tires having different sizes in a hybrid manner by performing the method according to the invention. The factory includes an automatic green tire building line 1 for building green tires in an automatic manner, a tire component manufacturing section 2 for manufacturing various components of the tires, and a tire component supplying section 3 arranged between said green tire building line 1 and the tire component manufacturing section 2 for storing various tire components manufactured by the tire component manufacturing section 2 and selectively supplying desired components to the automatic green tire building line 1 in accordance with a production process. The automatic green tire building line 1 comprises band building machine 4, green case building machine 5, belt tread band building machine 6 and green tire building machine 7 which are arranged separately from each other. In the present specification, the belt tread band is called a BT band for the sake of simplicity. In the band building machine 4, a band 11 having beads as shown in Fig. 2A is formed. Then, the band 11 is transported into the green case building machine 5 in which the band 11 is further processed to produce a green case 12 with side treads as illustrated in Fig. 2B. After that, the green case 12 is fed into the green tire building machine 7. At the same time, in the BT band building machine 6, a BT band 13 shown in Fig. 2C is formed and the thus formed BT band 13 is transported into the green tire building machine 7. In the green tire building machine 7, the green case 12 supplied from the green case building machine 5 and the BT band 13 supplied from the BT band building machine 6 are combined as depicted in Fig. 2D and then given processes are performed to produce a green tire 14 shown in Fig. 2E. It should be noted that the combined green case 12 and BT band 13 have corresponding sizes.

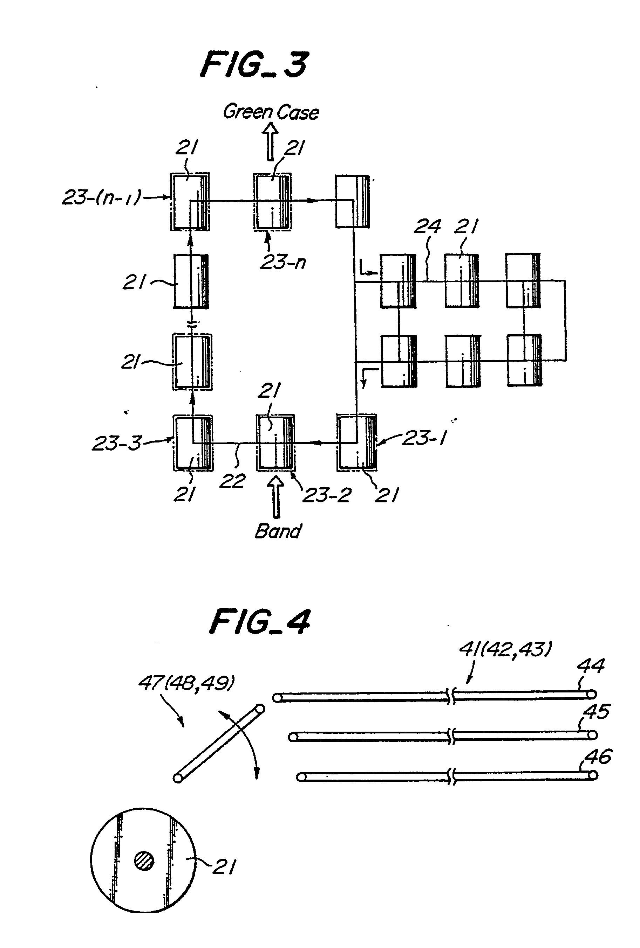

Fig. 3 is a schematic view illustrating the construction of an embodiment of the green case building machine 5. The green case building machine 5 comprises a plurality of drums 21 which are transferred along an endless drum feeding path 22 and are indexed at a plurality of processing stations 23-1 to 23-n. In the present embodiment, different kinds of tires, e.g. tires having different rim diameters of 13 inches and 14 inches are manufactured. Tires having the rim diameter of 13 inches have a plurality of different tire widths, and similarly the tires having the rim diameter of 14 inches also have a plurality of different tire widths, so that in the present embodiment tires having more than four sizes are manufactured. To this end, there are provided a plurality of drums 21 for building the tires of 13 inches and a plurality of drums 21 for building the tires of 14 inches, said drums being constructed such that their widths being able to be adjusted in accordance with the widths of the tires to be built. The green case building machine 5 further comprises a drum exchanging line 24 whose inlet and outlets are coupled with the drum feeding line 22 at positions between the last processing station 23-n and the first processing station 23-1. Into the drum exchanging line 24, drums 21 which have been used to build the bands are successively introduced, and an order of arrangement of the drums is exchanged in accordance with the rim sizes of tires to be manufactured successively. Then, the thus rearranged drums 21 are successively supplied into the drum feeding line 22.

The drums 21 successively introduced from the drum exchanging line 24 into the drum feeding line 22 are then indexed at the processing stations 23-1 to 23-n. For instance, at the first processing station 23-1, the widths of the drums 22 are automatically adjusted in accordance with the widths of the tires to be manufactured successively. At the processing station 23-2, the bands 11 manufactured by the band building machine 4 and having desired sizes are supplied onto the drums 21, and then given processes are performed for the bands 11 on respective drums 21 at the succeeding stations 23-3 to 23-(n-1) to build the green cases 13. At the last station 23-n, the thus built green cases 13 are removed from the drums 21 and are transferred into the green tire building machine 7. It should be noted that the remaining building machines, i.e. the band building machine 4, BT band building machine 6 and green tire building machine 7 have a similar construction to that explained above for the green case building machine 5, so that the detailed explanation thereof is dispensed with. If some of building drums may be commonly used in more than one building machine by simply changing parts thereof, it is also possible to transfer the drums between these building machines.

The tire component manufacturing section 2 comprises a plurality of component manufacturing machines 31, 32 and 33 as illustrated in Fig. 1. These component manufacturing machines 31, 32 and 33 produce components of tires which are used in the band building machine 4, green case building machine 5 and BT band building machine 6, respectively in the automatic tire building line 1. That is to say, these component manufacturing machines 31, 32 and 33 produce various components having different sizes corresponding to the rim sizes and tire widths. The components thus produced are successively supplied via selecting mechanisms 34, 35 and 36 into empty component stocking and feeding paths of the component supplying section 3. It should be noted that each of the component manufacturing machines 31, 32 and 33 in the component manufacturing section 2 may produce discrete components each having lengths necessary for building respective green tires or elongated components each having lengths sufficient for building a plurality of tires having the same size and width.

The component supplying section 3 comprises component supplying machines 41, 42 and 43 corresponding to the component manufacturing machines 31, 32 and 33, respectively. The component supplying machines 41, 42 and 43 operate to supply the desired components produced by the component manufacturing machines 31, 32 and 33, respectively into given processing stations of the band building machine 4, green case building machine 5 and BT band building machine 6, respectively in the automatic tire building line 1.

The component supplying machine 41 comprises three component stocking and feeding devices 44, 45 and 46 each having substantially flat component stocking and feeding paths. Desired amounts of components having different sizes manufactured by the component manufacturing machine 31 are stocked in each component stocking and feeding devices 44, 45 and 46. These components are selected by a selecting mechanism 47 arranged at outlets of the devices 44, 45 and 46 and then are supplied to a desired processing station of the band building machine 4.

Each of the component supplying machines 42 and 43 is constructed similarly to the above mentioned component supplying machine 41 and includes three component stocking and feeding devices which store required amounts of the components having different sizes. These components are selected by means of selecting mechanisms 48 and 49 in accordance with the sizes of tires to be built successively. The thus selected components are supplied from the component supplying machines 42 and 43 are transported into predetermined processing stations in the green case building machine 5 and BT band building machine 6, respectively.

In the present embodiment, the above mentioned automatic tire building line 1, component manufacturing section 2 and component supply section 3 are controlled in accordance with the production process such that green tires having different sizes are manufactured in a hybrid manner. To this end, as illustrated in Fig. 1, there are provided building control CPUs (center processing unit) 51, 52, 53 and 54 for controlling the operations of the building machines 4, 5, 6 and 7, respectively, so that the selection of the drums 21 in the drum exchange line 24, the adjustment of the drum width at the first processing station 23-1, timings for transferring the drums between the building machines, etc. are controlled by means of server control CPUs and servers not shown under the control of the building control CPUs 51 to 54. Further, the building control CPUs 51 to 54 are controlled by a building management CPU 55 in a unified manner. There are further provided component manufacturing control CPUs 56, 57 and 58 corresponding to the band building machine 4, green case building machine 5 and BT band building machine 6, respectively, so that the operations of the component manufacturing machines 31, 32 and 33, the operations of the component supplying machines 41, 42 and 43, the operations of the selecting mechanisms 34, 35 and 36, etc. are controlled by means of servers and server CPUs not shown under the control of the component manufacturing control CPUs 56 to 58. These component manufacturing control CPUs 56, 57 and 58 are further controlled by component manufacturing management CPUs 59, 60 and 61, respectively.

The building management CPU 55 and component manufacturing management CPUs 59 to 61 are further controlled in accordance with the production process by a tire product management CPU 62 by means of which the tire manufacturing factory as a whole is controlled.

Now the operation of the green tire manufacturing factory mentioned above will be explained.

The manufacturing management CPU 62 processes the production process to form respective production commands each including process command information which denotes a sequential order of tires to be manufactured successively. These production commands are sent to the building management CPU 55 and the component manufacturing management CPUs 59 to 61 by means of sequencer network groups, and then are stored in respective CPUs.

The building control CPUs 51 to 54 and component manufacturing control CPUs 56 to 58 receive given process data from the building management CPU 55 and component manufacturing management CPUs 59 to 61, respectively. Then, the building machines provided in the automatic green tire building line 1 select suitable drums 21 having desired rim sizes in accordance with an order of tires to be manufactured successively and the thus selected drums 21 are successively supplied into the endless drum feeding paths 22 of the building machines. In the component manufacturing section 2, the component manufacturing machines 31 to 33 produce components having desired sizes in accordance with a sequential order of the tires to be manufactured successively and the thus manufactured components are directly supplied in succession into empty component stocking and feeding paths of the component stocking and feeding devices 44 to 46 of the component supplying machines 41 to 43 in the component supply section 3.

The components stored in the component supplying machines 41 to 43 are directly supplied to servicers provided in the building machines 4 to 6 in accordance with the process data. At the same time, the process data corresponding to the relevant components is transferred from the component manufacture control CPUs 56 to 58 to the corresponding building control CPUs 51 to 54, so that the tire building operation is conducted, while the transferred process data is compared with that stored in the corresponding building control CPUs 51 to 54 to effect the tracking.

In the manner explained above, in each building machines 4 to 7, the drums 21 having the desired sizes corresponding to the sizes of the tires to be manufactured successively are selected and fed into the endless drum feeding paths under the control of the production process. In the band building machine 4, a band 11 having a desired size is produced and then the band thus built is transported into the green case building machine 5 and is set on a drum 21 having a corresponding size. Then, the band 11 set on the drum 21 is indexed at the various processing stations provided along the endless drum feeding path 22 and a green case 12 is built. Then, the green case 12 thus built is transferred into the green tire building machine 7 and is set on a drum 21 having a corresponding size. During these processes, the BT band building machine 6 produces a BT band 13 having a desired size, and the thus produced BT band 13 is transferred to the green tire building machine 7. Then, in the green tire building machine 7, the green case 12 and BT band 13 are combined on the drum to form an assembly and given processes are effected for this assembly during the portion of the assembly along the endless drum feeding path to produce a green tire 14. By repeating the above explained processes under the control of the production process, it is possible to manufacture the green tires having different sizes in a hybrid manner. After that the green tires are removed from the drums in the green tire building machine 7 and then are transferred into vulcanizers having desired sizes in a usual manner.

The present invention is not limited to the embodiment explained above, but may be modified in various ways. For instance, in the above embodiment the tires having the two different rim sizes are manufactured in a hybrid manner, but according to the invention it is also possible to manufacture tires having more than two different rim sizes. Moreover, the number of the component stocking and feeding devices is not limited to three, but two or more than three component stocking and feeding devices may be provided. Further, in the above embodiment, the component stocking and feeding devices 44 to 46 of the component supplying devices 41 to 43 are arranged side by side on a single horizontal plane, but they may be arranged vertically one on another as depicted in Fig. 4. In this case, the selecting mechanisms 47 to 49 are constructed rotatably in the vertical plane.

As explained above, in the tire manufacturing method according to the present invention, the automatic tire building line, component manufacturing section and component supplying section are controlled in an automatic and correlated manner in accordance with the manufacturing process, so that the manufacture of the desired components having different sizes can be previously manufactured in an efficient manner, and thus the green tire having different sizes can be manufactured with a very high efficiency. Moreover, the automatic tire building line is divided into the band building machine, green case building machine, BT band building machine and green tire building machine and in these building machines different drums having desired sizes corresponding to the sizes of the tires to be manufactured are used in respective building machines. Therefore, the drums are selectively used for manufacturing tires having predetermined sizes, so that the construction of the building drums can be made much simpler and less expensive. Further, the cumbersome and time consuming work for changing the size of the drums in the known method can be completely dispensed with, so that the change in the size of the tires can be promptly and easily attained. In this manner, according to the invention, the green tires having different sizes can be manufactured efficiently in a hybrid manner at a low cost.

The automatic tire building line and the component manufacturing section are coupled with each other by means of the component supplying section and the components manufactured in the component manufacturing section are directly supplied into the substantially flat component feeding paths of the component stocking and feeding devices and then the components having desired sizes are selectively supplied into the automatic tire building line. Therefore, the green tires having different sizes can be stably, efficiently and automatically manufactured in a hybrid manner without causing any undesired change in the property of the components. This results in that the tires manufactured by the method according to the invention have superior quality.

## Claims

1. A method of manufacturing tires with different sizes in a hybrid manner, comprising the steps of:
    controlling, in accordance with a production process, an automatic tire building line (1) for building green tires, a component manufacturing section (2) for producing various components for building tires of different sizes, and a component supplying section (3) for supplying components produced by the component manufacturing section (2) into said automatic tire building line (1) such that components corresponding to desired sizes of drums which correspond to sizes of tires to be manufactured in succession are selectively supplied to the automatic tire building line to produce green tires having desired sizes; and
    transferring the thus manufactured green tires to a succeeding process.

2. A method as claimed in claim 1, characterized in that the components produced by the component manufacturing section (2) are supplied to a plurality of substantially flat component feeding paths provided in the component supplying section (3) and are stocked therein.

3. A method as claimed in claim 2, characterized in that said components produced by said component manufacturing section (2) and stocked on said component feeding paths are formed to have lengths which are required to build a single tire.

4. A method as claimed in claim 2, characterized in that said components produced by said component manufacturing section (2) and stocked on said component feeding paths are formed to have lengths which are required to build a plurality of tires having the same size.

5. A method of manufacturing green tires having different sizes in a hybrid manner, comprising:
    producing components which are used for building green tires having different sizes in a component manufacturing section (2);
    supplying the components thus produced in the component manufacturing section to a plurality of substantially flat component feeding paths in a component supplying section (3);
    storing the components thus supplied to the component feeding paths therein;
    selectively supplying components stored in the component feeding paths to a band building machine (4), a green case building machine (5) and a belt tread band building machine (6);
    producing bands on drums having desired sizes in the band building machine (4);
    producing green cases on drums having desired sizes in the green case building machine (5);
    producing belt tread bands on drums having desired sizes in the belt tread building machine (6);
    transferring the green cases produced in the green case building machine (5) and the belt tread band produced by the belt tread band building machine (6) to a green tire building machine (7);
    producing green tires in the green tire building machine (7) by combining said green cases supplied from the green case building machine (5) and the belt tread band supplied from said belt tread band building machine (6) on drums having desired sizes; and
    controlling said component manufacturing section (2), component supplying section (3), band building machine (4), green case building machine (5), belt tread band building machine (6) and green tire building machine (7) in accordance with a production process such that green tires having different sizes are manufactured in a hybrid mode.

6. A method as claimed in claim 5, characterized in that a step of building a green tire having a desired size in said automatic tire building line (1) comprises the steps of:

producing a band (11) on a first drum in the band building machine (4), said first drum being selected from a plurality of first drums having different sizes and having a size corresponding to a size of the band to be manufactured;

removing the thus produced band from the first drum and transporting the band from the band building machine (4) onto a second drum in the green case building machine (5), said second drum being selected from a plurality of second drums having different sizes and having a size corresponding to a size of the green case (12) to be manufactured;

processing the band on the second drum to produce a green case (12);

removing the green case from the second drum and transferring the green case from the green case building machine (5) onto a third drum in the green tire building machine (7), said third drum being selected from a plurality of third drums having different sizes and a size corresponding to the desired size of the green tire to be manufactured;

producing a belt tread band (13) on a fourth drum in the belt tread band building machine (6), said fourth drum being selected from a plurality of fourth drums having different sizes and having a size corresponding to a size of the belt tread band to be manufactured;

removing the belt tread band from the fourth drum and transferring the belt tread band from the belt tread band building machine (6) onto the third drum in the green tire building machine (7); and

processing said green case (12) and belt tread band (13) on said third drum to produce the green tire (14) having the desired size.

7. A method as claimed in claim 6, characterized in that in each of said band building machine (4), green case building machine (5), belt tread band building machine (6) and green tire building machine (7), said plurality of drums having different sizes are fed along an endless feeding path into which drums having desired sizes are introduced from a drum exchange line in a desired order corresponding to an order of the green tires (14) to be manufactured successively, and in said endless feeding path, each of drums is indexed at successive processing stations to perform predetermined processes.

8. A method as claimed in claim 6 or 7, characterized in that in said component manufacturing section (2), components necessary for building the bands having different sizes are produced by a first component manufacturing machine (31), components necessary for building the green cases having different sizes are produced by a second component manufacturing machine (32), and components necessary for building the belt tread bands having different sizes are produced by a third component manufacturing machine (33); and in said component supplying section (3) each of the components manufactured by said first component manufacturing machine (31) is stocked on a first component feeding path by means of a first selecting machanism (34), said first component feeding path being selected from a plurality of first component feeding paths provided in a first component supplying machine (41) in accordance with a size of each respective component, each of the components manufactured by said second component manufacturing machine (32) is stocked on a second component feeding path by means of a second selecting mechanism (35), said second component feeding path being selected from a plurality of second component feeding paths provided in a second component supplying machine (42) in accordance with a size of each respective component, and each of the components manufactured by said third component manufacturing machine (33) is stocked on a third component feeding path by means of a third selecting mechanism (36), said third component feeding path being selected from a plurality of third component feeding paths provided in a third component supplying machine (43) in accordance with a size of each respective component; and the components stocked in the first, second and third component supplying machines (41,42,43) are selectively supplied to said band building machine (4), green case building machine (5) and belt tread band building machine (6), respectively in accordance with sizes of green tires to be manufactured successively by means of fourth, fifth and sixth selecting mechanisms (47,48,49), respectively.

9. A method as claimed in claim 8, characterized in that the operations of said band building machine (4), green case building machine (5), belt tread band building machine (6) and green tire building machine (7) are controlled by respective building control computers (51,52,53,54) which are controlled by a green tire building management computer (55); the operations of said component supplying section (3) are controlled by respective component manufacturing control computers (56,57,58) which are controlled by respective component manufacturing management computers (59,60,61); and said green tire building management computer (55) and component manufacturing management computers (59,60,61) are controlled in a unified manner by a production management computer (62) in accordance with a production process.

10. A method as claimed in claim 9, characterized in that in said building control computers, process data is compared with process data which is sent from corresponding component manufacturing control computers.

FIG_1

Band Building Machine 4 — Green Case Building Machine 5 — Green Tire Building Machine 7 — BT Band Building Machine 6

Component Manufacturing Machine 31 — Component Manufacturing Machine 32 — Component Manufacturing Machine 33

Production Management CPU 62

CPU 59 — CPU 60 — 61 CPU

34 56 — 35 57 — 36 58

44 45 — 41 — 46 — 42 — 43 — 49

47 — 48

CPU 55 — CPU 51 — CPU 52 — CPU 54 — 53 CPU

2 Component Manufacturing Section

3 Component Supplying Section

1 Automatic Green Tire Building Line

EP 0 448 407 A2

FIG_2A

*11*

FIG_2B

*12*

FIG_2C

*13*

FIG_2D

*12*

*13*

FIG_2E

*14*

## FIG_3

## FIG_4